# EUROPEAN PATENT APPLICATION

(11) **EP 2 840 865 A1**
(43) Date of publication of application: **25.02.2015**
(21) Application number: 13777917.9
(22) Date of filing: 09.04.2013
(51) Int. Cl.: H04W 92/18, H04W 48/10

(54) **WIRELESS COMMUNICATION SYSTEM, COMMUNICATION CONTROL DEVICE, WIRELESS COMMUNICATION TERMINALS, AND COMMUNICATION CONTROL METHOD**

(30) Priority: 18.04.2012 JP 2012095077
(71) Applicant: NTT DOCOMO, INC., Chiyoda-ku Tokyo 100-6150 (JP)
(72) Inventor: ISOBE, Shin-ichi, Tokyo 100-6150 (JP); NISHIDA, Katsutoshi, Tokyo 100-6150 (JP)
(74) Representative: Hoffmann Eitle
(86) International application number: PCT/JP2013/060674
(87) International publication number: WO 2013/157438

(57) **Abstract**

Provided are a radio communication system allowing D2D communication to be provided by using a radio access network such as LTE while controlling the radio communication terminals from the network side. A radio base station 100 broadcasts broadcast information to a predetermined radio communication area, the broadcast information indicating whether or not the direct communication is permitted. Terminals 400A, 400B start the direct communication based on the broadcast information received from the radio base station 100. When the direct communication is permitted, the radio base station 100 further sends configuration information on a communication environment necessary for direct communication to the predetermined communication area, and the terminals 400A, 400B establish the communication environment necessary for the direct communication based on the configuration information received from the communication control apparatus.

## Description

### TECHNICAL FIELD

The present invention relates to a radio communication system including multiple radio communication terminals and a communication control apparatus which controls direct communication between the radio communication terminals, and also relates to a communication control apparatus, a radio communication terminal, and a communication control method.

### BACKGROUND ART

Conventionally, Bluetooth (registered trademark) and ad-hoc mode of a wireless LAN are known as so-called Device-to-Device (D2D) communication that is a radio communication method in which multiple radio communication terminals (sometimes referred to simply as terminals hereinbelow) perform radio communication with each other directly without involving a radio base station or an access point. Such a radio method achieves short-range radio communication by using relatively-low radio transmission power. For this reason, it is difficult to use this radio communication method when the inter-terminal distance is long. In addition, in such a radio communication method, the radio transmission capacity is limited compared to a radio access network (e.g., UTRA (3G), E-UTRA (LTE), or GERAN (2G)) managed by a telecommunications carrier.

Against this background, it is being discussed to achieve the D2D communication by using a radio access network provided by a telecommunications carrier (e.g., Non-patent document 1) .

In the case of using a radio access technology employed in such a radio access network, the terminals uses a frequency band which the telecommunications carrier is licensed to use by supervisory authorities, and therefore are enabled to output higher radio transmission power and achieve long-distance, large-capacity D2D communication without using resources on the network side such as a radio base station. Such a characteristic is considered particularly effective when the network side such as the radio base station is devastated by an earthquake or the like. In addition, when the D2D communication is achieved using the frequency band used in a radio access network (such as 2G, 3G, or LTE) managed by a telecommunications carrier, the terminals can perform the D2D communication without being equipped with a module for another type of radio communication (e.g., Bluetooth (registered trademark)), which offers advantages such as cost and size reductions for the terminals.

### PRIOR ART DOCUMENT

### NON-PATENT DOCUMENT

Non-patent document 1: "Key drivers for LTE success: Services Evolution," September 2011, 3GPP, Internet URL: http://www.3gpp.org/ftp/Information/presentations/presentat ions_2011/2011_09_LTE_Asia/2011_LTE-Asia_3GPP_Service_evolu tion.pdf

### SUMMARY OF THE INVENTION

However, performing D2D communication by using the radio access network provided by the telecommunications carrier has the following problem. Specifically, since such a radio access technology is on the assumption that radio communication is performed via a radio base station, the network side cannot control terminals at all when the terminals perform D2D communication. D2D communication uses a frequency band used in the radio access network managed by a telecommunications carrier. Hence, if D2D communication is permitted without control by the telecommunications carrier (network) side, there might be a risk of untoward influence such as interference to the radio access network managed by the telecommunications carrier.

Thus, the present invention has been made in view of such circumstances, and has an objective of providing a radio communication system, a communication control apparatus, a radio communication terminal, and a communication control method allowing direct communication between radio communication terminals (D2D communication) to be provided by using a radio access network such as LTE while controlling the radio communication terminals from the network side.

A first feature of the present invention is summarized as a radio communication system including: multiple radio communication terminals; and a communication control apparatus configured to control direct communication between the multiple radio communication terminals. Here, the communication control apparatus includes a broadcast information transmission unit configured to broadcast broadcast information to a predetermined radio communication area, the broadcast information indicating whether or not the direct communication is permitted, the multiple radio communication terminals each include a direct communication execution unit configured to start the direct communication based on the broadcast information received from the communication control apparatus, when the direct communication is permitted, the broadcast information transmission unit further sends configuration information on a communication environment necessary for the direct communication, to the predetermined communication area, and the direct communication execution unit establishes the communication environment necessary for the direct communication based on the configuration information received from the communication control apparatus.

A second feature of the present invention is summarized as a communication control apparatus which controls direct communication between multiple radio communication terminals, the communication control apparatus including a broadcast information transmission unit configured to broadcast broadcast information to a predetermined radio communication area, the broadcast information indicating whether or not the direct communication is permitted. Here, when the direct communication is permitted, the broadcast information transmission unit further sends configuration information on a communication environment necessary for the direct communication, to the predetermined communication area.

A third feature of the present invention is summarized as a radio communication terminal which executes direct communication with another radio communication terminal without involving a radio access network, the radio communication terminal including a direct communication execution unit configured to start the direct communication based on broadcast information received from a communication control apparatus, the broadcast information indicating whether or not the direct communication is permitted. Here, the direct communication execution unit establishes a communication environment necessary for the direct communication based on configuration information on the communication environment necessary for the direct communication, the configuration information being received from the communication control apparatus.

A fourth feature of the present invention is summarized as a communication control method for controlling direct communication between multiple radio communication terminals, the method including the steps of: a radio communication system broadcasting broadcast information to a predetermined radio communication area, the broadcast information indicating whether or not the direct communication is permitted; when the direct communication is permitted, the radio communication system sending configuration information on a communication environment necessary for direct communication, to the predetermined communication area; the radio communication terminals establishing the communication environment necessary for the direct communication based on the configuration information received from the radio communication system; and the radio communication terminals starting the direct communication based on the broadcast information and the configuration information received from the radio communication system.

### BRIEF DESCRIPTION OF THE DRAWINGS

[Fig. 1] Fig. 1 is an overall schematic configuration diagram of a radio communication system 10 according to an embodiment of the present invention.
[Fig. 2] Fig. 2 is a functional block configuration diagram of a radio base station 100 according to the embodiment of the present invention.
[Fig. 3] Fig. 3 is a functional block configuration diagram of a terminal 400A according to the embodiment of the present invention.
[Fig. 4] Fig. 4 is a diagram showing a communication sequence in which the terminal 400A and a terminal 400B execute direct communication based on broadcast information according to the embodiment of the present invention.
[Fig. 5] Fig. 5 is a functional block configuration diagram of a communication control apparatus 300 according to a modification of the present invention.

### MODE FOR CARRYING OUT THE INVENTION

Next, an embodiment of the present invention will be described. Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Overall Schematic Configuration of the Radio Communication System

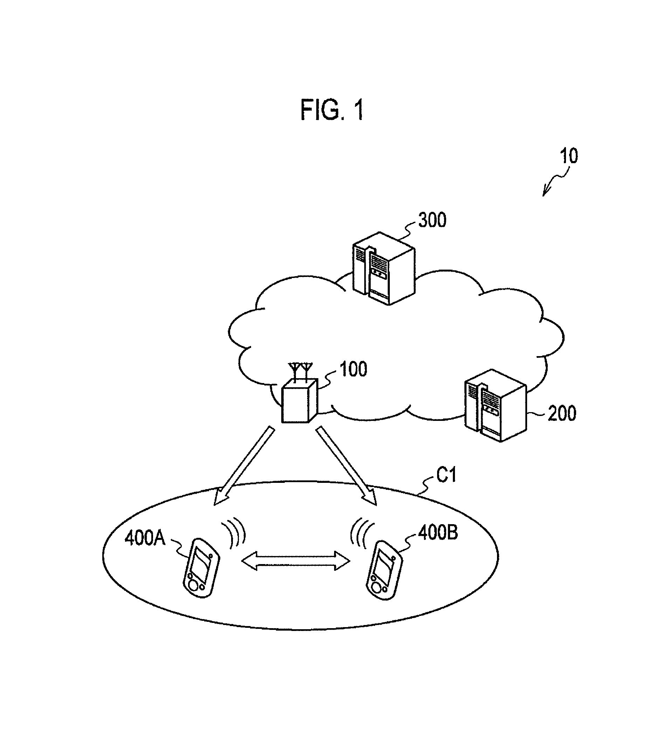

Fig. 1 is an overall schematic configuration diagram of a radio communication system 10 according to this embodiment. As shown in Fig. 1, the radio communication system 10 includes a radio base station 100, a billing system 200, a communication control apparatus 300, and multiple radio communication terminals 400A, 400B (terminals 400A, 400B hereinbelow).

The radio base station 100 performs operation conforming to a radio access technology (RAT) standardized by 3GPP, e.g., Long Term Evolution (LTE). In this embodiment, the radio base station 100 controls direct communication between the terminals 400A, 400B. More specifically, the radio base station 100 controls the direct communication by causing the radio base station 100 to transmit broadcast information indicating whether or not to permit communication between the terminal 400A and the terminal 400B without involving the radio base station 100, i.e., without involving a radio access network. Note that the broadcast information for controlling direct communication between the terminal 400A and the terminal 400B may be broadcasted separately from multiple radio base stations, e.g., the radio base station 100 and another radio base station (not shown).

In this way, in the radio communication system 10, direct communication between the terminal 400A and the terminal 400B is permitted based on the broadcast information from the radio access network side. In addition, when it is based on broadcast information from another radio base station (not shown), for example, direct communication may be permitted based on the broadcast information from the other radio base station even in an area not covered by the radio base station 100.

The billing system 200 manages billing according to a communication application executed by the terminals 400A, 400B. In this embodiment in particular, the billing system 200 manages billing for device-to-device direct communication (D2D communication) executed between the terminals 400A, 400B.

The communication control apparatus 300 controls communication executed by the terminals 400A, 400B. Specifically, the communication control apparatus 300 controls communication executed by the terminals 400A, 400B by responding to the broadcast information sent from the radio base station 100 or a communication request sent from the terminals 400A, 400B.

The terminal 400A and the terminal 400B are each a User Equipment (UE) configured to execute radio communication conforming to a radio access technology such as LTE. The terminal 400A (400B) can perform communication with the terminal 400B (400A) via the radio base station 100, and can perform direct communication with the terminal 400B (400A) without involving the radio base station 100. Specifically, the terminal 400A, 400B determines whether direct communication is executable or not based on the broadcast information broadcasted from the radio base station 100, and executes direct communication at a predetermined timing or any timing. Note that, for this determination, information notified of by the communication control apparatus 300 (e.g., a direct-communication permission notification) may be added as an element of determination.

### (2) Functional Block Configuration of the Radio Communication System

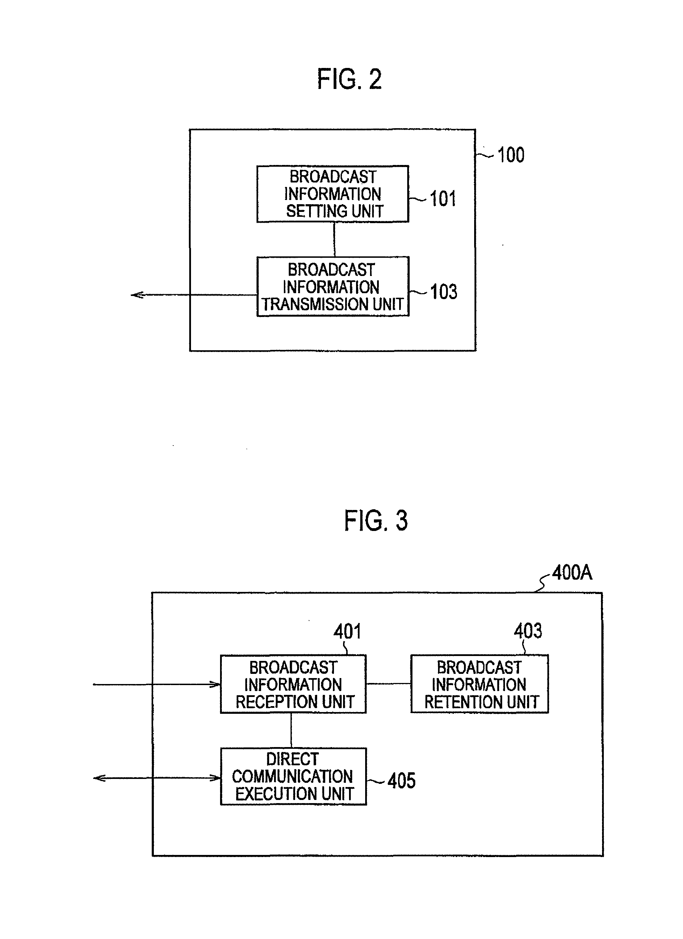

Next, a functional block configuration of the radio communication system 10 is described. Specifically, functional block configurations of the radio base station 100 and the terminal 400A (400B) are described. Fig. 2 is a functional block configuration diagram of the radio base station 100, and Fig. 3 is a functional block configuration diagram of the terminal 400A.

### (2.1) Radio Base Station 100

As shown in Fig. 2, the radio base station 100 includes a broadcast information setting unit 101 and a broadcast information transmission unit 103. Note that in an example described in this embodiment, the radio base station 100 includes the functionality of a communication control apparatus which controls direct communication between the terminal 400A and the terminal 400B.

The broadcast information setting unit 101 sets various kinds of broadcast information to be sent to a cell C1 formed by the radio base station 100. In this embodiment, the broadcast information setting unit 101 includes information indicating direct communication is possible, in the broadcast information sent periodically.

The broadcast information setting unit 101 defines an area, in terms of distance, in which direct communication is executable (e.g., the cell C1), and causes the broadcast information transmission unit 103 to send broadcast information indicating that direct communication is possible, toward that area. Note that the area (a predetermined radio communication area) is not limited to a unit of a cell, but may be set based on a unit of a sector, a tracking area, or a network. In addition, the broadcast information setting unit 101 can also include, in the broadcast information, timings for commanding start and end of direct communication by the terminals 400A, 400B.

The broadcast information transmission unit 103 sends broadcast information toward the predetermined radio communication area (e.g., the cell C1). As the broadcast information, for example, SIB (System Information Block) can be used. In this embodiment, the broadcast information transmission unit 103 broadcasts the broadcast information indicating whether direct communication is permitted or not, to the cell C1.

When direct communication is permitted, the broadcast information transmission unit 103 also sends the cell C1 configuration information on a communication environment necessary for direct communication. The configuration information contains a frequency band allowed for direct communication, the radio field intensity of radio signals, timing of origination by the terminal 400A, 400B (timing at which the direct communication is allowed to be performed), and the like. Note that the radio field intensity is desirably of a degree not causing interference to the radio communication between the radio base station 100 and the terminals 400A, 400B. The radio field intensity may be changed according to the distance between the terminal 400A and the terminal 400B.

As described, the broadcast information transmission unit 103 can send the predetermined radio communication area the configuration information containing a timing (time slot) at which direct communication can be executed, and the configuration information can contain a radio frequency band used for direct communication or the intensity of transmitted radio signals used for direct communication, an identifier (a telephone number, a terminal identifier, and a subscriber identifier) of a counterpart (terminating) terminal, and the like.

### (2.2) Terminal 400A

As shown in Fig. 3, the terminal 400A includes a broadcast information reception unit 401, a broadcast information retention unit 403, and a direct communication execution unit 405. Note that the terminal 400B has a similar functional block configuration.

The broadcast information reception unit 401 receives broadcast information sent from the radio base station 100. Specifically, the broadcast information reception unit 401 receives the broadcast information when the terminal 400A performs position registration periodically via the radio base station 100, is handed over, or roams into a new network. Alternatively, the broadcast information reception unit 401 can receive the broadcast information which is sent from the radio base station 100 in response to a request for starting direct communication sent from the direct communication execution unit 405.

The broadcast information retention unit 403 retains the broadcast information received by the broadcast information reception unit 401. Specifically, the broadcast information retention unit 403 retains the configuration information on direct communication contained in the broadcast information.

The direct communication execution unit 405 starts direct communication with the terminal 400B based on the broadcast information received from the radio base station 100. Specifically, the direct communication execution unit 405 establishes a communication environment necessary for direct communication, based on the broadcast information retained by the broadcast information retention unit 403 or on the configuration information on direct communication contained in the newest broadcast information received by the broadcast information reception unit 401. Alternatively, the direct communication execution unit 405 may establish the communication environment necessary for direct communication based on configuration information received and accumulated in the broadcast information retention unit 403.

Further, the direct communication execution unit 405 executes direct communication by sending radio signals at a predetermined timing based on the timing (time slot) at which direct communication is executable, which is contained in the configuration information.

### (3) Operation of the Radio Communication System

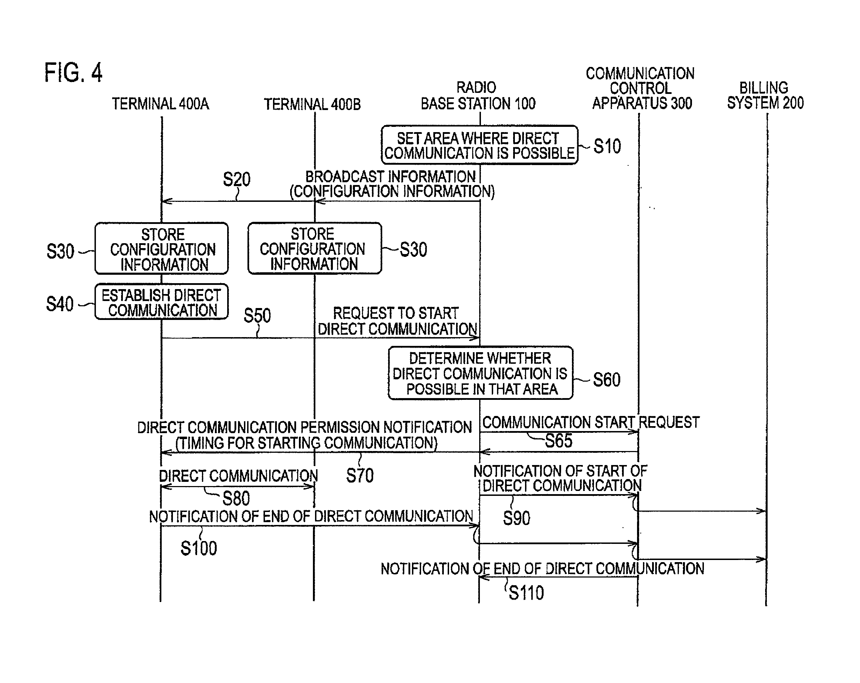

Next, operation of the above-described radio communication system 10 is described. Fig. 4 shows a communication sequence in which the terminals 400A, 400B execute direct communication based on broadcast information.

As shown in Fig. 4, the radio base station 100 sets an area where the terminals 400A, 400B can execute direct communication (S10). Specifically, as described above, the radio base station 100 can set the area where direct communication is executable on a cell basis, a sector basis, a tracking area basis, or a network basis. Herein, direct communication is executable in the cell C1.

The radio base station 100 sends broadcast information toward the cell C1, the broadcast information containing configuration information on direct communication (such as a frequency band, the radio field intensity of radio signals, and the like) (S20).

The terminals 400A, 400B stores therein the configuration information contained in the received broadcast information (S30), and establishes a communication environment necessary for direct communication based on the configuration information (S40).

Further, the terminal 400A sends the radio base station 100 a request for staring direct communication with the terminal 400B (S50). The radio base station 100 determines whether or not the terminals 400A, 400B camp in the area where direct communication is possible (S60). Herein, the radio base station 100 determines that direct communication is possible. The radio base station 100 transfers the request for staring direct communication to the communication control apparatus 300 (S65).

The communication control apparatus 300 sends a direct communication permission notification (containing a timing for executing direct communication) to the terminal 400A via the radio base station 100 (S70). Based on the permission notification, the terminal 400A starts direct communication with the terminal 400B (S80).

Meanwhile, for management of billing to the terminal 400A (or the terminal 400B) for the direct communication, the radio base station 100 notifies the billing system 200, via the communication control apparatus 300, that the terminal 400A has started direct communication with the terminal 400B (S90).

When the direct communication with the terminal 400B ends, the terminal 400A notifies the radio base station 100 that the direct communication has ended (S100). For management of billing to the terminal 400A (or the terminal 400B) for the direct communication, the radio base station 100 notifies the billing system 200, via the communication control apparatus 300, that the terminal 400A has ended direct communication with the terminal 400B (S110).

### (4) Advantageous Effects

According to the radio communication system 10, broadcast information indicating whether direct communication is permitted or not is broadcasted from the radio base station 100 to the terminals 400A, 400B. Further, when direct communication is permitted, configuration information on a communication environment necessary for direct communication is broadcasted to terminals 400A, 400B. Then, the terminals 400A, 400B establish a communication environment necessary for direct communication based on the configuration information received from the radio base station 100.

Hence, device-to-device direct communication (D2D communication) can be provided by using a radio access network such as LTE while controlling the terminals 400A, 400B from the network side. In other words, since direct communication can be executed while the terminals 400A, 400B are controlled from the network side, communication between the radio base station 100 and the terminals 400A, 400B is surely prevented from being affected (by interference or the like), enabling stable device-to-device direct communication.

### (5) Other Embodiment

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

For example, in the example described in the above embodiment of the present invention, the radio base station 100 includes the functionality of the communication control apparatus. Instead, this functionality may be included by an apparatus besides the radio base station 100, e.g., the communication control apparatus 300 placed on the network (e.g., a Serving Gateway (SGW), a Packet Data Network Gateway (PGW), a Mobility Management Entity (MME), or a GGSN (Gateway GPRS Serving Node)).

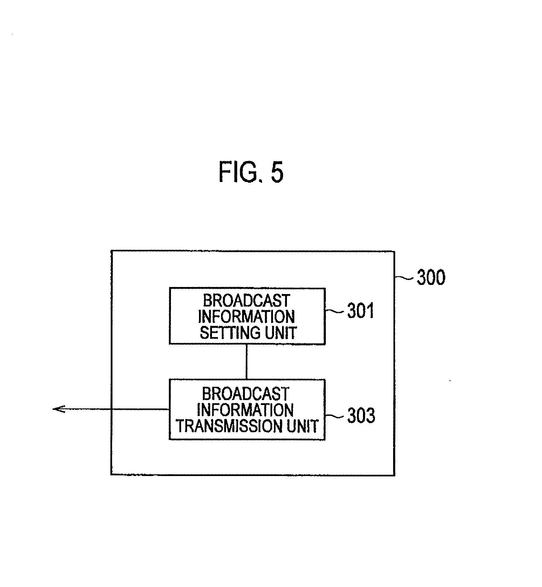

Fig. 5 is a functional block configuration diagram of the communication control apparatus 300 according to a modification of the present invention. As shown in Fig. 5, the communication control apparatus 300 includes a broadcast information setting unit 301 and a broadcast information transmission unit 303. The broadcast information setting unit 301 and the broadcast information transmission unit 303 correspond to the broadcast information setting unit 101 and the broadcast information transmission unit 103 of the radio base station 100, respectively. To be specific, the broadcast information setting unit 301, like the broadcast information setting unit 101, sets broadcast information to be sent to the terminals 400A, 400B. The broadcast information transmission unit 103 sends the broadcast information to the terminals 400A, 400B.

The above-described processing in Steps S60 and S70 shown in Fig. 4 is not essential, and the terminal 400Amay start direct communication with the terminal 400B without notifying the radio base station 100 of the start of the direct communication with the terminal 400B.

In case the radio access network is damaged by disaster or the like, the terminals 400A, 400B may start direct communication autonomously based on broadcast information (configuration information) stored in the terminals 400A, 400B in advance.

As described above, the present invention naturally includes various embodiments which are not described herein. Accordingly, the technical scope of the present invention should be determined only by the matters to define the invention in the scope of claims regarded as appropriate based on the description.

The features of the present invention may also be expressed as follows. A first feature of the present invention is summarized as a radio communication system 10 including: multiple terminals 400A, 400B; and a communication control apparatus (a radio base station 100) configured to control direct communication between the multiple radio communication terminals. Here, the communication control apparatus includes a broadcast information transmission unit 103 configured to broadcast broadcast information to a predetermined radio communication area, the broadcast information indicating whether or not the direct communication is permitted, the multiple radio communication terminals each include a direct communication execution unit 405 configured to start the direct communication based on the broadcast information received from the communication control apparatus, when the direct communication is permitted, the broadcast information transmission unit further sends configuration information on a communication environment necessary for the direct communication, to the predetermined communication area, and the direct communication execution unit establishes the communication environment necessary for the direct communication based on the configuration information received from the communication control apparatus.

In the first feature of the present invention, the broadcast information transmission unit may send the configuration information containing a time slot at which the direct communication is executable, to the predetermined radio communication area, and the direct communication execution unit may execute the direct communication based on the time slot contained in the configuration information received from the communication control apparatus.

In the first feature of the present invention, the configuration information may contain at least one of a radio frequency band and a radio field intensity of radio signals, which are to be used for the direct communication.

A second feature of the present invention is summarized as a communication control apparatus 300 which controls direct communication between multiple radio communication terminals, the communication control apparatus 300 including a broadcast information transmission unit 303 configured to broadcast broadcast information to a predetermined radio communication area, the broadcast information indicating whether or not the direct communication is permitted. Here, when the direct communication is permitted, the broadcast information transmission unit further sends configuration information on a communication environment necessary for the direct communication, to the predetermined communication area.

A third feature of the present invention is summarized as a radio communication terminal 400A (400B) which executes direct communication with another radio communication terminal without involving a radio access network, the radio communication terminal including a direct communication execution unit 405 configured to start the direct communication based on broadcast information received from a communication control apparatus (for example, a radio base station 100), the broadcast information indicating whether or not the direct communication is permitted. Here, the direct communication execution unit establishes a communication environment necessary for the direct communication based on configuration information on the communication environment necessary for the direct communication, the configuration information being received from the communication control apparatus.

A fourth feature of the present invention is summarized as a communication control method for controlling direct communication between multiple radio communication terminals, the method including the steps of: a radio communication system broadcasting broadcast information to a predetermined radio communication area, the broadcast information indicating whether or not the direct communication is permitted; when the direct communication is permitted, the radio communication system sending configuration information on a communication environment necessary for direct communication, to the predetermined communication area; the radio communication terminals establishing the communication environment necessary for the direct communication based on the configuration information received from the radio communication system; and the radio communication terminals starting the direct communication based on the broadcast information and the configuration information received from the radio communication system.

Note that the entire content of Japanese Patent Application No. 2012-095077 (filed on April 18, 2012) is incorporated by reference in the present specification.

### INDUSTRIAL APPLICABILITY

According to the aspects of the present invention, what can be provided are a radio communication system, a communication control apparatus, a radio communication terminal, and a communication control method allowing direct communication between radio communication terminals (D2D communication) to be provided by using a radio access network such as LTE with while controlling the radio communication terminals from the network side.

### EXPLANATION OF THE REFERENCE NUMERALS

- 10: radio communication system
- 100: radio base station
- 101: broadcast information setting unit
- 103: broadcast information transmission unit
- 200: billing system
- 300: communication control apparatus
- 400A, 400B: radio communication terminal
- 401: broadcast information reception unit
- 403: broadcast information retention unit
- 405: direct communication execution unit

## Claims

1. A radio communication system comprising:
a plurality of radio communication terminals; and
a communication control apparatus configured to control direct communication between the plurality of radio communication terminals, wherein
the communication control apparatus includes a broadcast information transmission unit configured to broadcast broadcast information to a predetermined radio communication area, the broadcast information indicating whether or not the direct communication is permitted,
the plurality of radio communication terminals each include a direct communication execution unit configured to start the direct communication based on the broadcast information received from the communication control apparatus,
when the direct communication is permitted, the broadcast information transmission unit further sends configuration information on a communication environment necessary for the direct communication, to the predetermined communication area, and
the direct communication execution unit establishes the communication environment necessary for the direct communication based on the configuration information received from the communication control apparatus.

2. The radio communication system according to claim 1, wherein
the broadcast information transmission unit sends the configuration information containing a time slot at which the direct communication is executable, to the predetermined radio communication area, and
the direct communication execution unit executes the direct communication based on the time slot contained in the configuration information received from the communication control apparatus.

3. the radio communication system according to claim 1, wherein
the configuration information contains at least one of a radio frequency band and a radio field intensity of radio signals, which are to be used for the direct communication.

4. A communication control apparatus which controls direct communication between a plurality of radio communication terminals, the communication control apparatus comprising
a broadcast information transmission unit configured to broadcast broadcast information to a predetermined radio communication area, the broadcast information indicating whether or not the direct communication is permitted, wherein
when the direct communication is permitted, the broadcast information transmission unit further sends configuration information on a communication environment necessary for the direct communication, to the predetermined communication area.

5. A radio communication terminal which executes direct communication with another radio communication terminal without involving a radio access network, the radio communication terminal comprising
a direct communication execution unit configured to start the direct communication based on broadcast information received from a communication control apparatus, the broadcast information indicating whether or not the direct communication is permitted, wherein
the direct communication execution unit establishes a communication environment necessary for the direct communication based on configuration information on the communication environment necessary for the direct communication, the configuration information being received from the communication control apparatus.

6. A communication control method for controlling direct communication between a plurality of radio communication terminals, the method comprising the steps of:
a radio communication system broadcasting broadcast information to a predetermined radio communication area, the broadcast information indicating whether or not the direct communication is permitted;
when the direct communication is permitted, the radio communication system sending configuration information on a communication environment necessary for direct communication, to the predetermined communication area;
the radio communication terminals establishing the communication environment necessary for the direct communication based on the configuration information received from the radio communication system; and
the radio communication terminals starting the direct communication based on the broadcast information and the configuration information received from the radio communication system.
